# EUROPEAN PATENT SPECIFICATION

(11) **EP 2 913 180 B1**
(45) Date of publication and mention of the grant of the patent: **07.03.2018**
(21) Application number: 14175062.0
(22) Date of filing: 30.06.2014
(51) Int. Cl.: B29C 70/44, B29C 70/48, B29C 70/54

(54) **System and method for resin flow control**
System und Verfahren zur Harzflusssteuerung
Système et procédé de commande d'écoulement de résine

(30) Priority: 27.02.2014 JP 2014036706
(43) Date of publication of application: 02.09.2015
(73) Proprietor: MITSUBISHI HEAVY INDUSTRIES, LTD., Tokyo 108-8215 (JP)
(72) Inventor: Miura, Kazuhiro, TOKYO, 108-8215 (JP); Shindo, Kentaro, TOKYO, 108-8215 (JP); Kayama, Hiroyuki, TOKYO, 108-8215 (JP)
(74) Representative: Intès, Didier Gérard André

(56) References cited:
- US-A1- 2011 046 771
- N. MONTÉS ET AL: "Application of Artificial Vision in flow redirection during filling of Liquid Composite Molding processes", AIP CONFERENCE PROCEEDINGS, vol. 907, 1 January 2007 (2007-01-01), pages 902-907, XP055199215, ISSN: 0094-243X, DOI: 10.1063/1.2729628
- DHIREN MODI ET AL: "Active control of the vacuum infusion process", COMPOSITES PART A: APPLIED SCIENCE AND MANUFACTURING, vol. 38, no. 5, 1 May 2007 (2007-05-01), pages 1271-1287, XP055199221, ISSN: 1359-835X, DOI: 10.1016/j.compositesa.2006.11.012
- U Pineda ET AL: "TOWARDS ARTIFICIAL VISION AND PATTERN RECOGNITION TECHNIQUES FOR APPLICATION IN LIQUID COMPOSITE MOULDING PROCESSES", V European Conference on Industrial Applications ECCOMAS CFD 2010, 14 June 2010 (2010-06-14), pages 14-17, XP055199227, Retrieved from the Internet: URL:http://congress.cimne.com/eccomas/cfd2 010/papers/01822.pdf [retrieved on 2015-06-30]
- JOHNSON ET AL: "Flow control using localized induction heating in a VARTM process", COMPOSITES SCIENCE AND TECHNOLOGY, ELSEVIER, UK, vol. 67, no. 3-4, 4 January 2007 (2007-01-04), pages 669-684, XP005822452, ISSN: 0266-3538, DOI: 10.1016/J.COMPSCITECH.2006.04.012

## Description

### TECHNICAL FIELD

This disclosure relates to a resin flow control system according to claim 1 and a resin flow control method according to claim 9 for controlling resin flow in a molding space where a fiber reinforced substrate is placed. The disclosure may be applied for the Resin Transfer Molding method (RTM) and the like for manufacturing a fiber reinforced composite material, for instance.

### BACKGROUND

In recent years, fiber reinforced composite materials such as the fiber reinforced plastic (FRP) are increasingly employed as a material for a wind turbine blade, an aircraft, an automobile, a vessel, a train vehicle and the like, since the fiber reinforced composite materials have high strength as well as light weight.

As described in Patent Document 1 for instance, the Resin Transfer Molding method (RTM) is known as a method of manufacturing a fiber reinforced composite material, that includes placing a fiber reinforced substrate on a mold, impregnating the fiber reinforced substrate with resin by injecting the resin into the molding space, and then curing the resin. Further, also recently known as derivations of the RTM are the Vacuum assisted Resin Transfer Molding method (VaRTM), the Light-RTM method, etc.

In the resin molding, when a fiber reinforced substrate disposed inside a molding space is impregnated with resin, the flow of the resin which is infiltrated into the fiber reinforced substrate may be inhomogeneous at portions where the thickness of the substrate changes or where the form is complicated, causing a manufacturing defect where resin is insufficient. Generally, a portion with insufficient resin is referred to as "dry spot", which may reduce the strength of the fiber reinforced composite material locally to a great extent. As a conventional countermeasure to such a manufacturing defect, a worker monitors the flow state of the resin to handle the variation in resin molding. However, in this case, there is a problem of the quality of the molded product being influenced by experience or ability of the worker.

Thus, a technique is now being developed and practically used, that performs a simulation of resin impregnation and places auxiliary materials such as the flow media to provide such a channel for resin impregnation that the dry spot is less likely to occur. Another technique is also known, that controls the temperature of the resin or the pressure inside the molding space in response to the variation in the resin impregnation upon manufacture so that the dry spot is less likely to occur. For instance, Patent Document 2 describes an RTM method of transferring the resin without producing the dry spot by providing a plurality of suction ports for reducing the pressure inside the molding space and preferentially using the suction port at the side where resin impregnation is delayed. Also, Patent Document 1 describes a method of avoiding occurrence of the dry spot by determining the region which has been impregnated with resin from the change in impedance of the electrodes arranged in a matrix state and by heating the part where the dry spot is about to occur.

### Citation List

### Patent Literature

Patent Document 1: WO2004/033176 A1
Patent Document 2: US2013/0270729 A1

### Non-patent Literature

Kobayashi, Matsuzaki, Todoroki, and Mizutani, "Smart Flow of VaRTM by Dielectric Heating using FullInterdigital Electrodes", M&M2009 Conference, The Japan Society of Mechanical Engineers, (2009): p. 461-463.
N. MONTES ET AL: "Application of Artificial Vision in flow redirection during filling of Liquid Composite Molding processes", AIP CONFERENCE PROCEEDINGS, vol. 907, 1 January 2007 (2007-01-01), pages 902-907, XP055199215,ISSN: 0094-243X, DOI: 10.1063/1.2729628.

### SUMMARY

### Technical Problem

As described above, in order to improve the quality of a resin molded product, such as the fiber reinforced composite materials for instance, it is important to maintain the proper flow state of the resin upon resin molding. That is, when there is a variation in the flow state of the resin, a manufacturing defect such as the dry spot may occur, reducing the strength of the resin molded product. Thus, it is desirable to monitor and appropriately control the flow state of the resin in order to manufacture a resin molded product of high quality.

In this regard, although the methods described in Patent Document 2 or Non-patent Document 1 enable monitoring or controlling the resin flow state, there is no disclosure of specific control method for correcting the flow state of the resin, which has been currently detected by monitoring, to the appropriate flow state.

In view of the above, an object of at least some embodiments of the present invention is to provide a resin flow control system and a resin flow control method capable of controlling the flow state of the resin upon resin molding to be appropriate and improving the quality of the resin molded product.

### Solution to Problem

According to some embodiments of the present invention, a resin flow control system is for controlling a resin flow upon a resin molding in which a resin is injected into a molding space where a fiber reinforced substrate is placed while a pressure in the molding space is reduced, and the resin flow control system comprises: an image detection part for detecting an image of an actual flow front being a front edge of the resin flow in the molding space; a difference calculation part for calculating a difference between the actual flow front obtained by the image detection part and an ideal flow front obtained based on at least a viscosity of the resin and a pressure distribution in the molding space; and a flow adjustment part for adjusting a flow state of the resin so that a variation in a distribution of the difference in a width direction of the actual flow front is reduced.

Hereinafter in the present specification, "an ideal flow front" is a flow front that realizes the appropriate flow state under which a defect of the resin flow (a defect that may lead to occurrence of the dry spot, for instance) does not occur in the molding space. The ideal flow front may be set arbitrarily. Also, "a width direction of the actual flow front" may be a perpendicular direction to the flow direction of the resin (the direction in which the resin infiltrates) in the image detected by the image detection part. However, in the case where the image detected by the image detection part is a three-dimensional image, "a width direction of the actual flow front" may be a direction perpendicular to the flow direction of the resin (the direction in which the resin infiltrates) in an arbitrary plane.

According to the above resin flow control system, it is possible to maintain the appropriate flow state of the resin upon resin molding and thus to improve the quality of the resin molded product. That is, in the above embodiment, the flow state of the resin is adjusted so that the variation in the distribution in the width direction of the differences between the actual flow front and the ideal flow front is reduced. By the ideal flow front being provided in this manner, the control target is clearly defined, which makes it possible to realize high controllability and to improve control accuracy. Also, by obtaining with time the distribution in the width direction of the differences between the actual flow front and the ideal flow front, it is possible to improve the flow state of the resin throughout the entire region that is impregnated with the resin. Therefore, it is possible to suppress occurrence of a manufacturing defect such as the dry spot and thus to improve the quality of the resin molded product.

In some embodiments, the resin flow control system further comprises an image division part for dividing the image detected by the image detection part into a plurality of unit areas, wherein the difference calculation part is configured to determine the difference based on the unit area between the ideal flow front and the actual flow front.

As a result, by using the unit areas set on the image that includes the flow front, it is possible to easily determine the difference between the ideal flow front and the actual flow front. Also, as it is possible to set unit areas with the image division part in accordance with the required control accuracy, it is possible to perform the control appropriate for the control target.

In one embodiment, the image division part is configured to set a size of the unit area based on a flow rate of the resin with which the fiber reinforced substrate is impregnated.

As a result, it is possible to set unit areas appropriate for each target.

In some embodiment, the image detection part includes a thermographic imaging device for detecting a temperature distribution in the molding space. In this case, a flow front recognition part may be also included, that recognizes a portion with larger temperature gradient than other portions as the actual flow front in the image detected by the image detection part by analyzing the image.

Upon resin molding, the resin is normally heated and then injected into the molding space. Thus, in the molding space, there occurs a temperature difference between the part impregnated with the resin and the part not impregnated with the resin. As a result, by detecting with a thermographic imaging device a part with large temperature gradient in the molding space, it is possible to accurately detect the actual flow front without direct contact.

In one embodiment, the flow adjustment part is configured to adjust at least one of an injection amount of the resin injected from each of at least two injection ports provided in communication with the molding space or a suction pressure of each of at least two suction ports provided in communication with the molding space so that the variation in the distribution of the difference is reduced in the width direction.

As a result, by adjusting at least one of the injection amount of the resin injected from each of the at least two injection ports or a suction pressure of each of the suction ports, it is possible to efficiently adjust the flow state of the resin.

In some embodiment, the flow adjustment part is configured to adjust output of at least one heater for heating the molding space.

As a result, by adjusting the heated state in the molding space, it is possible to vary the flow state of the resin by the portions, and thus to efficiently adjust the flow state of the resin.

In some embodiments, the resin flow control system further comprises a curvature acquisition part for acquiring a curvature of the actual flow front from the image detected by the image detection part, wherein the flow adjustment part is configured to adjust the flow state of the resin when the curvature acquired by the curvature acquisition part falls out of a preset curvature range or is off a preset target curvature.

Besides adjusting the flow state of the resin based on the difference in principle, the flow state of the resin is adjusted when the curvature acquired by the curvature acquisition part falls out of the preset curvature range or is off the preset target curvature. As a result, it is possible to perform such control that promotes formation of the appropriate flow front. For instance, when the flow front has a curvature out of the preset curvature range, at which the flow front forms a closed curve, there is high possibility that a dry spot, where the resin is insufficient, exists at the portion with such a curvature after molding. Thus, in such case, the flow state of the resin is adjusted so that a closed curve is not formed. As a result, it is possible to prevent occurrence of the dry spot in advance.

In some embodiments, the resin flow control system further comprises: a curvature acquisition part for acquiring a curvature of the actual flow front from the image detected by the image detection part; a closed curve detection part for detecting a closed curve position at which the actual flow front forms a closed curve based on the curvature obtained by the curvature acquisition part; and a memory part for storing the closed curve position detected by the closed curve detection part.

As described above, when the flow front has a curvature at which a closed curve is formed, there is possibility of occurrence of the dry spot. Thus, by storing the closed curve position detected by the closed curve detection part, it is possible to easily determine the position where the dry spot is likely to occur. Further, upon a test after molding, by focusing on the area near the closed curve position that has been stored, it is possible to efficiently detect the portion with a molding defect. Thus, it is possible to exclude the possibility of shipping the fiber reinforced composite material without having mended the dry spot, which is useful as a preventive measure for possible troubles.

A resin flow control method according to some embodiments of the present invention is for controlling a resin flow upon a resin molding in which a resin is injected into a molding space where a fiber reinforced substrate is placed while a pressure in the molding space is reduced, and comprises: an image detection step of detecting an image of an actual flow front being a front edge of the resin flow in the molding space; a difference calculation step of calculating a difference between an ideal flow front obtained based on at least a viscosity of the resin and a pressure distribution in the molding space and the actual flow front obtained by the image detection part; and a flow adjustment step of adjusting a flow state of the resin so as to reduce a variation in a distribution of the difference in a width direction of the actual flow front.

According to the above resin flow control method, it is possible to maintain the appropriate flow state of the resin upon resin molding and thus to improve the quality of the resin molded product. That is, in the above embodiment, the flow state of the resin is adjusted so that the variation in the distribution in the width direction of the differences between the actual flow front and the ideal flow front is reduced. By the ideal flow front being provided in this manner, the control target is clearly defined, which makes it possible to realize high controllability and to improve control accuracy. Also, by obtaining with time the distribution in the width direction of the differences between the actual flow front and the ideal flow front, it is possible to improve the flow state of the resin throughout the entire region that is impregnated with the resin. Therefore, it is possible to suppress occurrence of a manufacturing defect such as the dry spot and thus to improve the quality of the resin molded product.

### Advantageous Effects

According to some embodiments of the present invention, the flow state of the resin is adjusted so as to reduce the variation in the distribution in the width direction of the differences between the actual flow front and the ideal flow front. As a result, it is possible to realize high controllability and to improve control accuracy. Also, by obtaining with time the distribution in the width direction of the differences between the actual flow front and the ideal flow front, it is possible to improve the flow state of the resin throughout the entire region that is impregnated with the resin. Therefore, it is possible to suppress occurrence of a manufacturing defect such as the dry spot and thus to improve the quality of the resin molded product.

### BRIEF DESCRIPTION OF DRAWINGS

FIG. 1 is a diagram of an overall configuration of the resin flow control system according to the embodiment of the present invention.
FIG. 2 is an exemplary diagram of the image of the flow front according to the embodiment of the present invention.
FIG. 3 is a diagram of an example of the temporal change of the ideal flow front.
FIG. 4 is an exemplary diagram of another image of the flow front according to the embodiment of the present invention.
FIG. 5 is an exemplary diagram of yet another image of the flow front according to the embodiment of the present invention.
FIG. 6 is a flow chart of the resin flow control method according to the embodiment of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

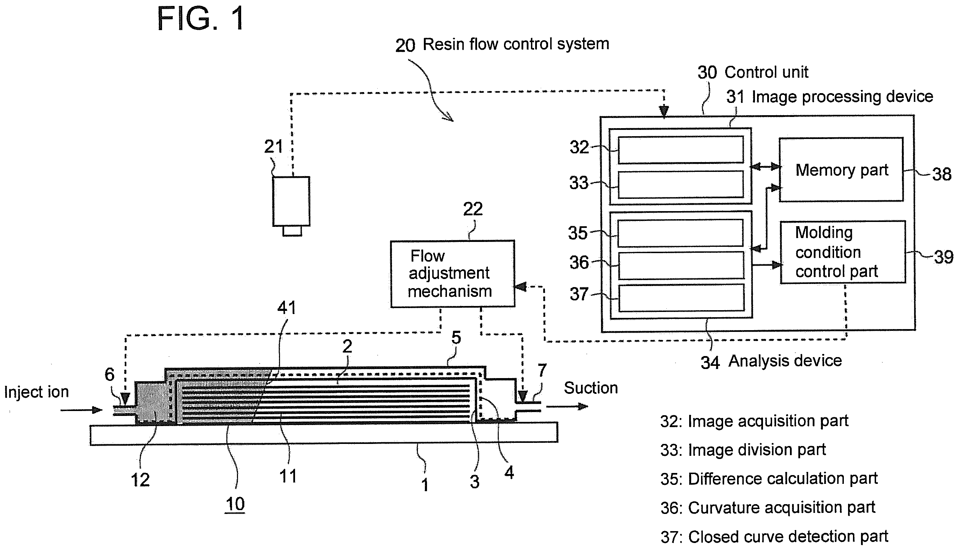

Fig. 1 is a diagram of an overall configuration of the resin flow control system according to the embodiment.

The resin flow control system 20 and the resin flow control method according to the present embodiment can be employed for the resin molding method in general that includes injecting resin 12 into a molding space 2 where a fiber reinforced substrate 11 is placed while reducing the pressure inside the molding space 2. Although the Vacuum assisted Resin Transfer Molding method (VaRTM) is described specifically in the embodiment below, the system and method of the embodiment are not limited to this, and can be applied for other molding methods such as the Resin Transfer Molding method (RTM) and Light RTM method.

First, the VaRTM method according to one embodiment will be described.

As shown in the drawing, the fiber reinforced substrate 11, being a substrate composed of dry fibers that are not impregnated with the resin 12, is placed on the mold 1 and fixed. Then, on the fiber reinforced substrate 11, a peeling sheet (peel ply) 3 and a mesh sheet for spreading resin (flow medium) 4 are placed in this order. The peeling sheet 3 is to make it easy to remove the fiber reinforced composite material 10 after molding. The mesh sheet for spreading resin 4 is to promote infiltration of resin described below into the fiber reinforced substrate 11. Herein, the peeling sheet 3 and the mesh sheet for spreading resin 4 are used selectively and when appropriate.

A face of the mold 1, on which the fiber reinforced substrate 11 is to be placed, may have a flat surface, or may include a concave (not shown). Also, the fiber reinforced substrate 11 placed on the mold 1 may be fixed with a fixing member. As the fiber in the fiber reinforced substrate 11, a known fiber may be used, such as the carbon fiber, the aramid fiber, and the glass fiber, for instance. Also, the fiber reinforced substrate 11 may be a one-or multi-axial direction fiber sheet (or tape) with fibers arranged in a flow direction.

Then, the fiber reinforced substrate 11 placed on the mold 1 is covered by a bag film 5 which is hermetically sealable. The pressure inside the bag film 5 is reduced and resin 12 in liquid form is injected into the bag film 5.

Specifically, the fiber reinforced substrate 11 is covered with the bag film 5, which includes an injection port 6 and a suction port 7. Then, the molding space 2, which is surrounded by the bag film 5 and the mold 1, is hermetically sealed with a sealing member (not shown). Next, a vacuum pump is connected to the suction port 7 and thereby the pressure inside the molding space 2 is reduced by the vacuum pump. Further, the resin 12 of liquid form is injected into the molding space 2 where the pressure is reduced via the injection port 6. At this time, the resin 12 is normally warmed to have higher temperature than the room temperature when being injected in order to reduce the viscosity. For instance, the initial viscosity of the epoxy resin becomes 1/2 when the temperature changes to 30 degrees from 20 degrees. Thus, the resin 12 is injected being warmed so as to have the viscosity at which the appropriate flow state can be obtained.

In response to the pressure inside the molding space 2 being reduced, the resin 12 is caused to flow and transfer inside the molding space 2 by the variation in the pressure distribution inside the molding space 2 (that is, the pressure difference between the suction port side and the injection port side). As a result, the fiber reinforced substrate 11 is gradually impregnated with the resin 12. The shaded area in Fig. 1 shows the area where the fiber reinforced substrate 11 is impregnated with the resin 12. Herein, the resin 12 may be a thermosetting resin such as the unsaturated polyester, the epoxy resin, the polyamide resin, and the phenol resin, or a thermoplastic resin such as the polybutylene terephthalate resin.

At this time, the flow state of the resin 12 is adjusted using the resin flow control system 20 or the resin flow control method according to the present embodiment described below.

Then, the resin 12 is cured so as to obtain a fiber reinforced composite material 10 integrally formed of the fiber reinforced substrate 11 and the resin 12. Specifically, in the case where the resin 12 is a thermosetting resin, the resin 12 is cured by the reaction under the heated condition or the condition of room temperature. On the other hand, in the case where the resin 12 is a thermoplastic resin, the resin having been melted is cured by cooling.

Next, the fiber reinforced composite material 10 is removed from the mold 1 to be cut in accordance with the size of the product.

Subsequently, the configuration of the resin flow control system 20 according to the embodiment of the present invention will be described.

The resin flow control system 20 according to some embodiments is configured to control the flow state of the resin 12 upon resin molding, and mainly includes an image detection part (which includes a thermographic imaging device 12 and an image acquisition part 32, for instance), a difference calculation part 35, a flow adjustment part (which includes a flow adjustment mechanism 22 and a molding condition control part 39, for instance) and a memory part 38.

Further, the resin flow control system 20 according to one embodiment may further include at least one of an image division part 33, a curvature acquisition part 36, and a closed curve detection part 37.

As a specific example of the device configuration, the resin flow control system 20 may include a thermographic imaging device 21, an image processing device 31, an analysis device 34, a control unit 30 having a memory part 38 and a molding condition control part 39, and a flow adjustment mechanism 22. The image processing device 31 includes the image acquisition part 32 and the image division part 33. Also, the image processing device 31 may include an image division part 33. The analysis device 34 includes the difference calculation part 35. Also, the analysis device 34 may include the curvature acquisition part 36, or both of the curvature acquisition part 36 and the closed curve detection part 37. For instance, the control unit 30 includes a CPU (Central Processing Unit), RAM (Random Access Memory), a computer-readable storage, etc, which are not shown in the drawings. The series of procedures of the process for achieving the various functions described below is stored in a storage and the like in the form of a program. By the CPU retrieving the program for the RAM and the like to perform processing and calculation for the information, the various functions described below are achieved.

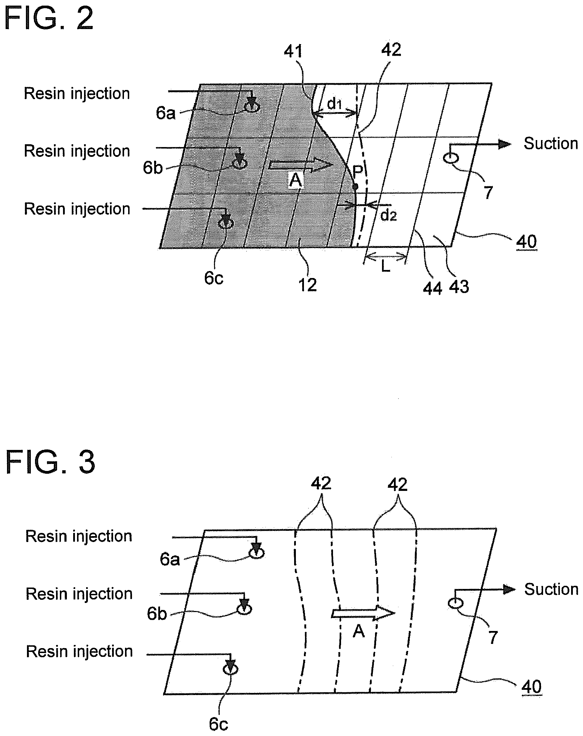

Hereinafter, in reference to Figs. 1 to 3, specific configuration of each part will be described in details. Fig. 2 is an exemplary diagram of the image of the flow front according to the embodiment of the present invention. Fig. 3 is a diagram of an example of the temporal change of the ideal flow front.

As shown in Fig. 1, the image detection part is configured to detect the image of the actual flow front being the front edge of the resin 12 in the molding space 2. For instance, the image detection part includes the thermographic imaging device 21 for detecting the temperature distribution in the molding space 2 and the image acquisition part 32 for acquiring the temperature distribution detected by the thermographic imaging device 21. The thermographic imaging device 21 is configured to detect the temperature distribution in the molding space 2 continuously or intermittently. The image acquisition part 32 is configured to acquire the image of temperature distribution from the thermographic imaging device 21. At this time, a plurality of different images of temperature distribution is acquired with time. The acquired images may be stored in the memory part 38. As shown in Fig. 2, the temperature distribution image acquired by the image acquisition part 32 includes the actual flow front 41 being the front edge of the resin 12 that flows in the molding space 2. By detecting the temperature distribution in the molding space 2 with the thermographic imaging device 21 as described above, it is possible to accurately detect the actual flow front 41 as a portion with a large temperature gradient in the molding space 2 without direct contact. In this case, a flow front recognition part (not shown) may be also included, that recognizes a portion with larger temperature gradient than other portions in the image as the actual flow front by analyzing the image detected by the image detection part. Although the embodiment illustrates the case where the thermographic imaging device 21 is used for acquiring the image 40 including the actual flow front 41, the measure for acquiring the image 40 is not limited to this. For instance, the image 40 including the actual flow front 41 may be acquired using the electric resistance in the molding space 2.

Referring back to Fig. 1, the difference calculation part 35 is configured to calculate the differences d₁, d₂ between the ideal flow front 42 (see Fig. 2 and Fig. 3) and the actual flow front 41 obtained by the image detection part (see Fig. 2). Herein, the ideal flow front 42 is obtained based on at least the viscosity of the resin 12 and the pressure distribution in the molding space 2, being a flow front that realizes the appropriate flow state under which a defect in the flow of the resin 12 (a defect of the flow that may lead to occurrence of the dry spot, for instance) does not occur in the molding space 2. The ideal flow front 42 may be set arbitrarily. The viscosity of the resin 12 can be obtained from the type and the temperature condition of the resin 12. Also, the pressure distribution in the molding space 2 can be obtained from the suction pressure from the suction port 7 or the resin amount injected from the injection port 6. Herein, upon obtaining the ideal flow front 42, other molding conditions may be taken into consideration, such as the form or size of the molding space 2, and the position or number of the injection port 6 or the suction port 7. Specifically, the ideal flow front 42 may be obtained by a simulation that takes into account the above molding conditions. Alternately, the ideal flow front 42 may be obtained experientially or experimentally taking into account the above molding conditions. As shown in Fig. 3, the ideal flow front 42 changes with time from the start of resin injection. That is, the ideal flow front 42 transfers in the direction of arrow A toward the suction port 7 side from the injection port 6 side. Thus, information related to a plurality of ideal flow fronts 42 may be stored in the memory part 38 in accordance with the time passed from the start of the resin injection.

Further, the difference calculation part 35 obtains the differences d₁, d₂ in the width direction between the actual flow front 41 the ideal flow front 42. In reference to Fig. 2, specifically, the ideal flow front 42 corresponding to the actual flow front 41 is selected at first. For instance, the ideal flow front 42 that corresponds to the time passed from the start of the resin injection may be selected. Alternately, the ideal flow front 42 may be selected such that the most advanced point P of the actual flow front 41 overlaps with the ideal flow front 42. Moreover, the ideal flow front 42 may be selected such that the average value of the distance between the injection port 6 and the actual flow front 41 is the same as the average value of the distance between the injection port 6 and the ideal flow front 42.

The differences d₁, d₂ between the actual flow front 41 and the ideal flow front 42 selected as described above are calculated in the width direction of the actual flow front 41. The width direction of the actual flow front 41 may be a direction perpendicular to the resin flow direction A (the direction in which the resin infiltrates) on the image detected by the image detection part. However, in the case where the image 40 detected by the image detection part is a three-dimensional image, the width direction of the actual flow front 41 may be a direction perpendicular to the resin flow direction (the direction in which the resin infiltrates) in an arbitrary plane. For instance, the differences d₁, d₂ between the ideal flow front 42 and the actual flow front 41 may be calculated on at least two different points in this width direction.

The flow adjustment part is configured to adjust the flow state of the resin 12 so that the variation in the distribution in the width direction of the differences d₁, d₂ between the actual flow front 41 and the ideal flow front 42 is reduced. For instance, the flow adjustment part includes the molding condition control part 39 and the flow adjustment mechanism 22. In this case, the molding condition control part 39 generates a control signal for reducing the variation in the distribution in the width direction of the differences d₁, d₂ between the actual flow front 41 and the ideal flow front 42, and outputs the control signal to the flow adjustment mechanism 22. Then, the flow adjustment mechanism 22 is controlled based on this control signal to adjust the flow state of the resin 12.

In one embodiment, the flow adjustment part is configured to adjust at least one of the injection amount of the resin 12 injected from each of the at least two injection ports 6 provided in communication with the molding space 2 or the suction pressure of each of the at least two suction ports 7 provided in communication with the molding space 2, so that the variation in the distribution in the width direction of the differences d₁, d₂ is reduced. Illustrated in Fig. 2 is the case where three injection ports 6a, 6b, 6c and one suction port 7 are provided. In this case, by adjusting the amount of the resin 12 injected from the three injection ports 6a, 6b, 6c, the flow state of the resin 12 is adjusted. For instance, the amount of the resin 12 injected from the injection port 6a, which is positioned on the side where the speed of impregnation of the resin 12 is delayed, is increased compared to the amount of the resin 12 injected from the injection port 6c, which is positioned on the side where the speed of impregnation of the resin 12 is not delayed. As a result, by adjusting at least one of the injection amount of the resin 12 injected from each of the at least two injection ports 6 or the suction pressure of the suction ports 7, it is possible to efficiently adjust the flow state of the resin 12.

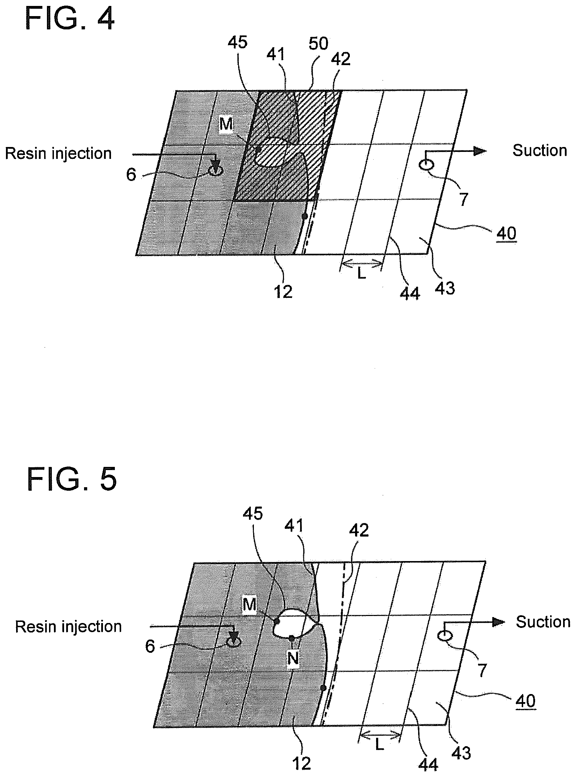

In another embodiment, as shown in Fig. 4, the flow adjustment part is configured to adjust the output of at least one heater for heating the molding space 2. Herein, Fig. 4 is an exemplary diagram of another image 40 of the flow front according to the embodiment of the present invention. In this embodiment, using the heater capable of partially heating inside the molding space 2, the area 50 near the actual flow front 41 on the side where the speed of resin impregnation is delayed is heated partially. As an exemplary configuration of the heater, a plurality of flat rectangular heaters may be buried in order under the mold 1, or a plurality of similar flat rectangular heaters may be disposed onto the bag film 5. Accordingly, by adjusting the heated state inside the molding space 2, it is possible to vary the flow state of the resin 12 from portion to portion, and thus to efficiently adjust the flow state of the resin 12.

According to the above embodiment, it is possible to maintain the appropriate flow state of the resin 12 upon resin molding and thus to improve the quality of the resin molded product 10. That is, in the above embodiment, the flow state of the resin 12 is adjusted so as to reduce the variation in the distribution in the width direction of the differences d₁, d₂ between the actual flow front 41 and the ideal flow front 42 corresponding to the appropriate flow state of the resin 12. By the ideal flow front 42 being provided in this manner, the control target is clearly defined, which makes it possible to realize high controllability and to improve control accuracy. Also, by obtaining with time the distribution in the width direction of the differences d₁, d₂ between the actual flow front 41 and the ideal flow front 42, it is possible to improve the flow state of the resin 12 throughout the entire region that is impregnated with the resin 12. Therefore, it is possible to suppress occurrence of a manufacturing defect such as the dry spot, thus improving the quality of the resin molded product 10.

Further, the resin flow control system 20 according to the present embodiment may have the following configuration. As shown in Figs. 1 and 2, in one embodiment, the resin flow control system 20 further includes the image division part 33 for dividing the image 40 detected by the image detection part into a plurality of unit areas 43, and the difference calculation part 35 is configured to determine the differences d₁, d₂ based on the unit areas 43 between the ideal flow front 42 and the actual flow front 41. Specifically, the image division part 33 places a mesh 44 over the image 40 including the actual flow front 41 to divide the image 40 into the unit areas 43. The size of the unit areas 43 may be set in accordance with the flow rate of the resin 12 with which the fiber reinforced substrate 11 is impregnated. For instance, the distance L between the strands of the mesh 44 in the flow direction A of the resin 12 is set in accordance with the flow rate of the resin 12. At this time, the distance between the strands of the mesh 44 (for instance, the distance L in the flow direction A) may have a lower limit value that is set based on the resolution of the image 40 (for instance, the distance of the size of one pixel), and an upper limit that is set based on the required control accuracy. In this case, the distance between the strands of the mesh 44 is set within this range.

As a result, it is possible to set the appropriate unit areas 43 for each target. Also, the size of the unit areas 43 may be determined based on the result of a simulation which calculates the flow state of the resin 12, or determined experimentally or experientially.

By using the unit areas 43 set for the image 40 including the actual flow front 41 as described above, it is possible to easily determine the differences d₁, d₂ between the ideal flow front 42 and the actual flow front 41. Also, as the image division part 33 is capable of setting the unit areas 43 in accordance with the required control accuracy, it is possible to perform the appropriate control for each target. The flow adjustment part may be configured to adjust the flow of the resin 12 when the differences d₁, d₂ between the ideal flow front 42 and the actual flow front 41exceed the preset number of unit areas 43 (for instance, when exceeding one unit area 43).

As shown in Figs. 1 and 4, in one embodiment, the resin flow control system 20 further includes the curvature acquisition part 36 for acquiring the curvature of the actual flow front 41 from the image 40 detected by the image detection part. In this case, the flow adjustment part is configured to adjust the flow state of the resin 12 based on the differences d₁, d₂ in principle, and also adjusts the flow state of the resin 12 when the curvature acquired by the curvature acquisition part 36 falls out of a preset curvature range or is off a preset target curvature. The curvature range or the target curvature may be stored in the memory part 38. For instance, when the actual flow front 41 has a curvature such that the actual flow front 41 forms a closed curve 45 out of the preset curvature range at the position M of the actual flow front 41, there is high possibility that a dry spot, where the resin is insufficient, exists at the portion after resin molding. Herein, such a position of the actual flow front 41 that has a curvature at which a closed curve is formed is referred to as a closed curve position. That is, at the closed curve position M, the dry spot may occur because air is trapped inside the closed curve 45 or the resin 12 flows outside the closed curve 45, causing the resin 12 to fall short inside the closed curve 45. Accordingly, in such case, the flow state of the resin 12 is adjusted so that the closed curve 45 is not formed at the closed curve position M. As a result, it is possible to prevent occurrence of the dry spot in advance. Also, the flow state of the resin 12 may be adjusted when the curvature acquired by the curvature acquisition part 36 falls out of the appropriate curvature range which has been set in advance.

As described above, by adjusting the flow state of the resin 12 based on the curvature of the actual flow front 41, it is possible to perform such control that promotes formation of the appropriate flow front.

As shown in Figs. 1 and 5, in another embodiment, the resin flow control system 20 further includes the curvature acquisition part 36 for acquiring the curvature of the actual flow front 41 from the image 40 detected by the image detection part and the closed curve detection part 37 for detecting the closed curve position M, N being a portion of the actual flow front 41 at which a closed curve 45 is formed based on the curvature acquired by the curvature acquisition part 36. Herein, Fig. 5 is an exemplary diagram of another image of the flow front according to the embodiment of the present invention. The closed curve positions M, N detected by the closed curve detection part 37 may be stored in the memory part 38. At this time, the memory part 38 may store information of the coordinate of the closed curve position M, N, or may store the identifying number of the closed curve position M, N when the image 40 is divided into the unit areas 43, the identifying number being associated with each unit area 43 in advance.

When the actual flow front 41 has the curvature at which the closed curve 45 is formed, there is possibility of occurrence of the dry spot. Thus, by storing the closed curve position M, N detected by the closed curve detection part 37, it is possible to easily determine the position where the dry spot is likely to occur. Further, upon a test after molding (for instance, the non-destructive test), by focusing on the area near the stored closed curve position, it is possible to efficiently detect the portion with a molding defect. Thus, it is possible to exclude the possibility of shipping the fiber reinforced composite material 10 without having mended the dry spot, which is useful as the preventive measure for possible troubles.

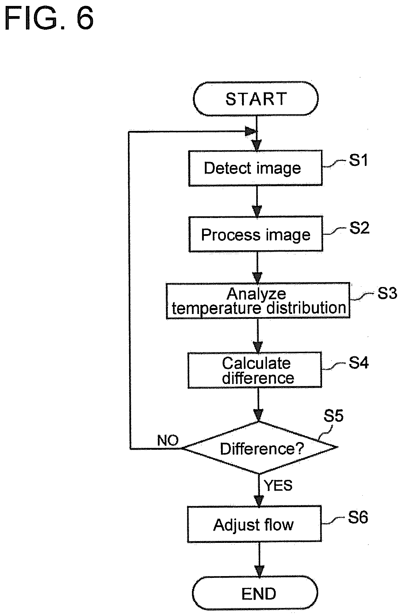

Hereinafter, in reference to Fig. 6, the resin flow control method according to the embodiment of the present invention will be described. Fig. 6 is a flow chart of the resin flow control method according to the embodiment of the present invention.

As shown in Fig. 1, upon resin molding in which resin is injected into the molding space 2 where the fiber reinforced substrate is placed while reducing the pressure inside the molding space 2, the temperature distribution inside the molding space 2 is detected with the thermographic imaging device 21 in the image detection step S1. The image including the information of the temperature distribution detected by the thermographic imaging device 21 is transmitted to the image acquisition part 32. This information of the temperature distribution includes the actual flow front 41 of the resin 12. Next, image processing is performed for the image inputted to the image acquisition part 32 in the image processing step S2. Then the temperature distribution analysis is performed for the image after the image processing in the temperature distribution analysis step S3. As a result, the region with large temperature gradient in the image is extracted and the image 40 including the actual flow front 41 is obtained (see Fig. 2). At this time, the image 40 may be divided into a plurality of unit areas 43 with the image division part 33.

Next, the difference between the ideal flow front 42 and the actual flow front 41 is calculated in the difference calculation step S4. Then, it is determined whether the difference exists in the width direction of the actual flow front in the difference determination step S5. When the difference exists in at least one position in the width direction, the flow state of the resin 12 is adjusted with the flow adjustment part so that the variation in the distribution of the differences in the width direction of the actual flow front 41 is reduced in the flow adjustment step S6. For instance, the flow adjustment part adjusts the flow state of the resin 12 by adjusting at least one of the injection amount of the resin 12 injected from each of the at least two injection ports 6 or the suction pressure of each of the at least two suction ports 7. Alternately, the flow adjustment part may adjust the flow state of the resin 12 by adjusting the output of at least one heater for heating the molding space 2. When there is no difference determined between the actual flow front 41 and the ideal flow front 42 in the difference determination step S5, return to the image detection step S1.

As described above, according to the above embodiment, the flow state of the resin 12 is adjusted so that the variation in the distribution in the width direction of the differences "d" between the actual flow front 41 and the ideal flow front 42 is reduced. As a result, it is possible to realize high controllability and to improve control accuracy upon controlling the flow state of the resin 12. Also, by obtaining with time the distribution in the width direction of the differences "d" between the actual flow front 41 and the ideal flow front 42, it is possible to improve the flow state of the resin 12 throughout the entire region that is impregnated with the resin 12. Therefore, it is possible to suppress occurrence of a manufacturing defect such as the dry spot and thus to improve the quality of the resin molded product 10.

Embodiments of the present invention were described in detail above, but the present invention is not limited thereto, and various amendments and modifications may be implemented within a scope of the present invention.

### Reference Signs List

- 1: Mold
- 2: Molding space
- 3: Peeling sheet
- 4: Mesh sheet for spreading resin
- 5: Bag film
- 6: Injection port
- 7: Suction port
- 10: Fiber reinforced composite material
- 11: Fiber reinforced substrate
- 12: Resin
- 20: Resin flow control system
- 21: Thermographic imaging device
- 22: Flow adjustment mechanism
- 30: Control unit
- 31: Image processing device
- 32: Image acquisition part
- 33: Image division part
- 34: Analysis device
- 35: Difference calculation part
- 36: Curvature acquisition part
- 37: Closed curve detection part
- 38: Memory part
- 39: Molding condition control part
- 40: Image
- 41: Actual flow front
- 42: Ideal flow front
- 43: Unit area
- 44: Mesh
- 45: Closed curve

## Claims

1. A resin flow control system (20) for controlling a resin flow upon a resin molding in which a resin (12) is injected into a molding space (2) where a fiber reinforced substrate (11) is placed while a pressure in the molding space (2) is reduced, the resin flow control system (20) comprising:
an image detection part for detecting an image of an actual flow front (41) being a front edge of the resin flow in the molding space (2);
a difference calculation part (35) for calculating a difference between the actual flow front (41) obtained by the image detection part and an ideal flow front (42) obtained based on at least a viscosity of the resin (12) and a pressure distribution in the molding space (2);
a flow adjustment part (22) for adjusting a flow state of the resin (12) so that a variation in a distribution of the difference in a width direction of the actual flow front (41) is reduced; and
a curvature acquisition part (36) for acquiring a curvature of the actual flow front (41) from the image detected by the image detection part, **characterised in that** the flow adjustment part (22) is configured to adjust the flow state of the resin (12) when the curvature acquired by the curvature acquisition (36) part falls out of a preset curvature range or is off a preset target curvature.

2. The resin flow control system (20) according to claim 1, further comprising
an image division part (33) for dividing the image detected by the image detection part into a plurality of unit areas (43),
wherein the difference calculation part (35) is configured to determine the difference based on the unit area (43) between the ideal flow front (42) and the actual flow front (41).

3. The resin flow control system (20) according to claim 2,
wherein the image division part (33) is configured to set a size of the unit area (43) based on a flow rate of the resin (12) with which the fiber reinforced substrate (11) is impregnated.

4. The resin flow control system (20) according to any of claims 1 to 3,
wherein the image detection part includes a thermographic imaging device (21) for detecting a temperature distribution in the molding space (2).

5. The resin flow control system (20) according to claim 4, further comprising
a flow front recognition part that recognizes a portion with larger temperature gradient than other portions as the actual flow front (41) in the image obtained by the image detection part by analyzing the image.

6. The resin flow control system (20) according to any of claims 1 to 5,
wherein the flow adjustment part (22) is configured to adjust at least one of an injection amount of the resin (12) injected from each of at least two injection ports (6) provided in communication with the molding space (2) or a suction pressure of each of at least two suction ports (7) provided in communication with the molding space (2) so that the distribution of the difference is equalized in the width direction.

7. The resin flow control system (20) according to any of claims 1 to 6,
wherein the flow adjustment part (22) is configured to adjust output of at least one heater for heating the molding space (2).

8. The resin flow control system (20) according to any of claims 1 to 7, further comprising:
a curvature acquisition part (36) for acquiring a curvature of the actual flow front (41) from the image detected by the image detection part;
a closed curve detection part (37) for detecting a closed curve position at which the actual flow front (41) forms a closed curve based on the curvature obtained by the curvature acquisition part (36); and
a memory part (38) for storing the closed curve position detected by the closed curve detection part (37).

9. A resin flow control method for controlling a resin flow upon a resin molding in which a resin (12) is injected into a molding space (2) where a fiber reinforced substrate (11) is placed while a pressure in the molding space (2) is reduced, the resin flow control method comprising:
an image detection step of detecting an image of an actual flow front (41) being a front edge of the resin flow in the molding space (2);
a difference calculation step of calculating a difference between an ideal flow front (42) obtained based on at least a viscosity of the resin (12) and a pressure distribution in the molding space (2) and the actual flow front (41) obtained by the image detection part; and
a flow adjustment step of adjusting a flow state of the resin (12) so as to equalize a distribution of the difference in a width direction of the actual flow front (41); and
a curvature acquisition step of acquiring a curvature of the actual flow front (41) from the image detected by the image detection step, **characterised in that** the flow adjustment step is configured to adjust the flow state of the resin (12) when the curvature acquired by the curvature acquisition step falls out of a preset curvature range or is off a preset target curvature.

## Patentansprüche

1. Harzflusssteuerungssystem (20) zum Steuern eines Harzflusses bei einem Harzformvorgang, bei dem ein Harz (12) in einen Formraum (2) eingespritzt wird, wo ein faserverstärktes Substrat (11) angeordnet ist, während ein Druck in dem Formraum (2) reduziert wird, wobei das Harzflusssteuerungssystem (20) umfasst:
einen Bilderfassungsteil zum Erfassen eines Bilds einer Ist-Fließfront (41), die eine Vorderkante des Harzflusses in dem Formraum (2) ist,
einen Differenzberechnungsteil (35) zum Berechnen einer Differenz zwischen der Ist-Fließfront (41), die durch den Bilderfassungsteil erhalten wird, und einer idealen Fließfront (42), die basierend auf mindestens einer Viskosität des Harzes (12) und einer Druckverteilung in dem Formraum (2) erhalten wird,
einen Flusseinstellteil (22) zum Einstellen eines Fließzustands des Harzes (12) derart, dass eine Variation einer Verteilung der Differenz in einer Breitenrichtung der Ist-Fließfront (41) reduziert wird, und
einen Krümmungserfassungsteil (36) zum Erfassen einer Krümmung der Ist-Fließfront (41) aus dem durch den Bilderfassungsteil erfassten Bild,
**dadurch gekennzeichnet, dass**
der Flusseinstellteil (22) dazu ausgebildet ist, den Fließzustand des Harzes (12) einzustellen, wenn die durch den Krümmungserfassungsteil (36) erfasste Krümmung aus einem voreingestellten Krümmungsbereich hinausfällt oder nicht einer voreingestellten Sollkrümmung entspricht.

2. Harzflusssteuerungssystem (20) nach Anspruch 1, ferner umfassend
einen Bildteilungsteil (33) zum Teilen des durch den Bilderfassungsteil erfassten Bildes in mehrere Einheitsbereiche (43),
wobei der Differenzberechnungsteil (35) dazu ausgebildet ist, basierend auf dem Einheitsbereich (43) die Differenz zwischen der idealen Fließfront (42) und der Ist-Fließfront (41) zu bestimmen.

3. Harzflusssteuerungssystem (20) nach Anspruch 2,
wobei der Bildteilungsteil (33) dazu ausgebildet ist, eine Größe des Einheitsbereichs (43) basierend auf einer Flussrate des Harzes (12), mit dem das faserverstärkte Substrat (11) imprägniert wird, einzustellen.

4. Harzflusssteuerungssystem (20) nach einem beliebigen der Ansprüche 1 bis 3,
wobei der Bilderfassungsteil eine thermographische Bilderzeugungsvorrichtung (21) zum Erfassen einer Temperaturverteilung in dem Formraum (2) umfasst.

5. Harzflusssteuerungssystem (20) nach Anspruch 4, ferner umfassend
einen Fließfronterkennungsteil, der einen Abschnitt mit größerem Temperaturgradienten als andere Abschnitte der Ist-Fließfront (41) in dem durch den Bilderfassungsteil erhaltenen Bild durch Analysieren des Bilds erkennt.

6. Harzflusssteuerungssystem (20) nach einem beliebigen der Ansprüche 1 bis 5,
wobei der Flusseinstellteil (22) dazu ausgebildet ist, mindestens eines aus der Gruppe umfassend eine Einspritzmenge des Harzes (12), das von jeder von mindestens zwei Einspritzöffnungen (6), die in Verbindung mit dem Formraum (2) vorgesehen sind, eingespritzt wird, und einen Saugdruck von jeder der mindestens zwei Saugöffnungen (7), die in Verbindung mit dem Formraum (2) vorgesehen sind, derart einzustellen, dass die Verteilung der Differenz in der Breitenrichtung ausgeglichen ist.

7. Harzflusssteuerungssystem (20) nach einem beliebigen der Ansprüche 1 bis 6,
wobei der Flusseinstellteil (22) dazu ausgebildet ist, die Leistung von mindestens einer Heizvorrichtung zum Beheizen des Formraums (2) einzustellen.

8. Harzflusssteuerungssystem (20) nach einem beliebigen der Ansprüche 1 bis 7, ferner umfassend:
einen Krümmungserfassungsteil (36) zum Erfassen einer Krümmung der Ist-Fließfront (41) aus dem durch den Bilderfassungsteil erfassten Bild,
einen Schließkurvenerfassungsteil (37) zum Erfassen einer Schließkurvenposition, an der die Ist-Fließfront (41) eine geschlossene Kurve bildet, basierend auf der durch den Krümmungserfassungsteil (36) erhaltenen Krümmung, und
einen Speicherteil (38) zum Speichern der Schließkurvenposition, die durch den Schließkurvenerfassungsteil (37) erfasst wird.

9. Harzflusssteuerungsverfahren zum Steuern eines Harzflusses bei einem Harzformvorgang, bei dem ein Harz (12) in einen Formraum (2) eingespritzt wird, wo ein faserverstärktes Substrat (11) angeordnet ist, während ein Druck in dem Formraum (2) reduziert wird, wobei das Harzflussregelungsverfahren umfasst:
einen Bilderfassungsschritt des Erfassens eines Bilds einer Ist-Fließfront (41), die eine Vorderkante des Harzflusses in dem Formraum (2) ist,
einen Differenzberechnungsschritt des Berechnens einer Differenz zwischen einer idealen Fließfront (42), die basierend auf mindestens einer Viskosität des Harzes (12) und einer Druckverteilung in dem Formraum (2) erhalten wurde, und der Ist-Fließfront (41), die durch den Bilderfassungsteil erhalten wurde, und
einen Flusseinstellschritt des Einstellens eines Fließzustands des Harzes (12), um eine Verteilung der Differenz in einer Breitenrichtung der Ist-Fließfront (41) auszugleichen, und
einen Krümmungserfassungsschritt zum Erfassen einer Krümmung der Ist-Fließfront (41) aus dem durch den Bilderfassungsteil erfassten Bild,
**dadurch gekennzeichnet, dass**
der Flusseinstellschritt dazu ausgebildet ist, den Fließzustand des Harzes (12) einzustellen, wenn die durch den Krümmungserfassungsschritt erfasste Krümmung aus einem voreingestellten Krümmungsbereich hinausfällt oder nicht einer voreingestellten Sollkrümmung entspricht.

## Revendications

1. Système de commande d'écoulement de résine (20) destiné à commander un écoulement de résine lors d'un moulage en résine dans lequel une résine (12) est injectée dans un espace de moulage (2) où un substrat renforcé de fibres (11) est placé alors qu'une pression dans l'espace de moulage (2) est réduite, le système de commande d'écoulement de résine (20) comportant :
une partie de détection d'image destinée à détecter une image d'un front d'écoulement réel (41) qui est un bord avant de l'écoulement de résine dans l'espace de moulage (2) ;
une partie de calcul de différence (35) destinée à calculer une différence entre le front d'écoulement réel (41) obtenu par la partie de détection d'image et un front d'écoulement idéal (42) obtenu sur la base d'au moins une viscosité de la résine (12) et d'une distribution de pression dans l'espace de moulage (2) ;
une partie d'ajustement d'écoulement (22) destinée à ajuster un état d'écoulement de la résine (12) de telle sorte qu'une variation d'une distribution de la différence dans une direction de largeur du front d'écoulement réel (41) est réduite ; et
une partie d'acquisition de courbure (36) destinée à acquérir une courbure du front d'écoulement réel (41) à partir de l'image détectée par la partie de détection d'image,
**caractérisé en ce que**
la partie d'ajustement d'écoulement (22) est configurée pour ajuster l'état d'écoulement de la résine (12) quand la courbure acquise par la partie d'acquisition de courbure (36) tombe en dehors d'une plage de courbure préétablie ou est hors d'une courbure de cible préétablie.

2. Système de commande d'écoulement de résine (20) selon la revendication 1, comportant en outre
une partie de division d'image (33) destinée à diviser l'image détectée par la partie de détection d'image en une pluralité d'unités de surface (43),
dans lequel la partie de calcul de différence (35) est configurée pour déterminer la différence sur la base de l'unité de surface (43) entre le front d'écoulement idéal (42) et le front d'écoulement réel (41).

3. Système de commande d'écoulement de résine (20) selon la revendication 2,
dans lequel la partie de division d'image (33) est configurée pour établir une taille de l'unité de surface (43) sur la base d'un débit de la résine (12) avec laquelle le substrat renforcé de fibres (11) est imprégné.

4. Système de commande d'écoulement de résine (20) selon l'une quelconque des revendications 1 à 3,
dans lequel la partie de détection d'image comprend un dispositif de formation d'image thermographique (21) destiné à détecter une distribution de température dans l'espace de moulage (2).

5. Système de commande d'écoulement de résine (20) selon la revendication 4, comportant en outre
une partie de reconnaissance de front d'écoulement qui identifie une partie avec un plus grand gradient de température que d'autres parties comme front d'écoulement réel (41) dans l'image obtenue par la partie de détection d'image en analysant l'image.

6. Système de commande d'écoulement de résine (20) selon l'une quelconque des revendications 1 à 5,
dans lequel la partie d'ajustement d'écoulement (22) est configurée pour ajuster au moins une d'une quantité d'injection de la résine (12) injectée depuis chacun d'au moins deux orifices d'injection (6) prévus en communication avec l'espace de moulage (2) ou d'une pression d'aspiration de chacun d'au moins deux orifices d'aspiration (7) prévus en communication avec l'espace de moulage (2) de telle sorte que la distribution de la différence est égalisée dans la direction de largeur.

7. Système de commande d'écoulement de résine (20) selon l'une quelconque des revendications 1 à 6,
dans lequel la partie d'ajustement d'écoulement (22) est configurée pour ajuster une sortie d'au moins un dispositif de chauffage destiné à chauffer l'espace de moulage (2).

8. Système de commande d'écoulement de résine (20) selon l'une quelconque des revendications 1 à 7, comportant en outre :
une partie d'acquisition de courbure (36) destinée à acquérir une courbure du front d'écoulement réel (41) à partir de l'image détectée par la partie de détection d'image ;
une partie de détection de courbe fermée (37) destinée à détecter une position de courbe fermée au niveau de laquelle le front d'écoulement réel (41) forme une courbe fermée sur la base de la courbure obtenue par la partie d'acquisition de courbure (36) ; et
une partie de mémoire (38) destinée à enregistrer la position de courbe fermée détectée par la partie de détection de courbe fermée (37).

9. Procédé de commande d'écoulement de résine destiné à commander un écoulement de résine lors d'un moulage en résine dans lequel une résine (12) est injectée dans un espace de moulage (2) où un substrat renforcé de fibres (11) est placé alors qu'une pression dans l'espace de moulage (2) est réduite, le procédé de commande d'écoulement de résine (20) comportant :
une étape de détection d'image destinée à détecter une image d'un front d'écoulement réel (41) qui est un bord avant de l'écoulement de résine dans l'espace de moulage (2) ;
une étape de calcul de différence destinée à calculer une différence entre un front d'écoulement idéal (42) obtenu sur la base d'au moins une viscosité de la résine (12) et d'une distribution de pression dans l'espace de moulage (2) et le front d'écoulement réel (41) obtenu par la partie de détection d'image ; et
une étape d'ajustement d'écoulement destinée à ajuster un état d'écoulement de la résine (12) de façon à égaliser une distribution de la différence dans une direction de largeur du front d'écoulement réel (41) ; et
une étape d'acquisition de courbure destinée à acquérir une courbure du front d'écoulement réel (41) à partir de l'image détectée par l'étape de détection d'image,
**caractérisé en ce que**
l'étape d'ajustement d'écoulement est configurée pour ajuster l'état d'écoulement de la résine (12) quand la courbure acquise par l'étape d'acquisition de courbure tombe en dehors d'une plage de courbure préétablie ou est hors d'une courbure de cible préétablie.
